Europäisches Patentamt

European Patent Office

Office européen des brevets

(19)

(11) Publication number: 0 342 858
A2

## (12) EUROPEAN PATENT APPLICATION

(21) Application number: 89304758.9

(22) Date of filing: 10.05.89

(51) Int. Cl.4: H04B 7/15

The title of the invention has been amended (Guidelines for Examination in the EPO, A-III, 7.3).

(30) Priority: 13.05.88 JP 117992/88

(43) Date of publication of application:
23.11.89 Bulletin 89/47

(84) Designated Contracting States:
DE FR GB

(71) Applicant: SHIMIZU CONSTRUCTION CO., LTD.
2-16-1, Kyobashi Chuo-ku
Tokyo 104(JP)

(72) Inventor: Ishikawa, Toshiyuki c/o Chimizu
Constr. Co., Ltd.
2-16-1, Kyobashi Chuo-ku
Tokyo 104(JP)
Inventor: Yabana, Yoshiji c/o Shimizu Constr.
Co., Ltd.
2-16-1, Kyobashi Chuo-ku
Tokyo 104(JP)
Inventor: Takahashi, Takeshi c/0 Shimizu
Constr. Co., Ltd.
2-16-1, Kyobashi Chuo-ku
Tokyo 104(JP)

(74) Representative: Bubb, Antony John Allen et al
GEE & CO. Chancery House Chancery Lane
London WC2A 1QU(GB)

(54) System for re-emitting electromagnetic waves received from outside within an electromagnetic shielded space.

(57) A system for re-emitting electric waves within an electromagnetically shielded space (1) and for performing communication between the inside and the outside of the shielded space using an electronic wave in a particular frequency band, has a receiver (2,3) for receiving a signal having a frequency in a particular frequency band from an extraneous electric wave, and a transmitter (4,5) for amplifying the signal received by the receiver and thereafter re-emitting the amplified signal within the electromagnetically shielded space (1). A paging system or a mobile radio telephone system using electric waves can be thereby utilized even in an electromagnetically shielded space (1) where the ambient level of received extraneous electric waves would otherwise be insufficient.

FIG. 1

## SYSTEM FOR RE-EMITTING EXTRANEOUS ELECTRIC WAVES WITHIN ELECTROMAGNETICALLY SHIELD-ED SPACE

This invention relates to a system for re-emitting extraneous electric waves within an electromagnetically shielded space, i.e., a system for introducing an extraneous waves into the interior of a building whose outer peripheral structural members including outer walls and windows are formed of electromagnetic shielding materials.

In ordinary intelligent buildings, a mass of information communication equipment including a composite electronic switchboard and a computer is used in a common system to allow the efficient communication of information inside the building and between the inside and the outside of the building. For such a system, it is important to supply desired information rapidly while reducing the cost of doing so, because the amount of information being communicated these days is increasing.

Certain types of system that use coaxial cables or optical fibers as communication means are known. These systems, however, necessitate the installation of coaxial cables or optical fibers. Also, the arrangement of installed coaxial cables or optical fibers needs to be changed whenever the interior equipment layout is changed. These systems are thus disadvantageous in terms of installation cost and flexibility with respect to system mobility and facility for modification.

It is possible to solve these problems by adopting a system in which electric waves are used to communicate information inside the building. However, the use of electric waves is regulated on the basis of wireless telegraphy legislation, and there are problems with electrical noise and potential tapping by sensing of leak electric waves. More specifically, it is necessary to prevent any internal electric waves from escaping to the outside of the building and to prevent any extraneous electric waves from entering the building in order that communication at a freely selected frequency band can be performed.

The applicant of the present invention has proposed various means relating to intelligent buildings which are designated to enable internal communication utilizing electric waves by using electromagnetic shielding materials in outer structural members and members constituting openings such as windows, entrances and exits so that the whole of the building is constructed as an electromagnetically shielded structure.

There are various examples of widely used communication systems based on the use of electric waves; e.g., a paging system and a mobile radio telephone system. In these systems, it is possible to communicate as long as the reception sensitivity is above a predetermined level, but it is impossible to communicate if the system fails to maintain the desired level of sensitivity. Problems are therefore accountered in using these systems in an electromagnetically shielded space of the above-mentioned type.

Ordinarily, the attenuation of electric waves is reduced if the height from the ground at which the electric waves propagate is comparatively great. It is possible to use a system such as a paging system effectively in the higher stories of a high-rise building even if the building has an electromagnetically shielded structure with electric wave attenuation of 20 to 30 dB. However, in regard to lower stories, i.e., the tenth story and below including basements, the electric wave propagation efficiency is not high enough to assure suitable clarity of communication signals. In consequence, in intelligent buildings having the above-mentioned electromagnetically shielding structure, the intensity of electric waves entering the building from the outside is reduced to a very low level because of the particular kind of building construction employed, and a system using electric waves, such as a paging system, cannot be used effectively.

An object of the present invention is to enable a system using electric waves such as a paging system to be used effectively. Another object of the present invention is to enable use of a paging system or the like in an electromagnetically shielded space.

To these ends, the present invention provides a system for re-emitting within an electromagnetically shielded space an extraneous wave in a particular frequency band to perform communication between the inside and the outside of the shielded space, the system having: a receiving means for receiving a signal having a frequency in a particular frequency band from an extraneous electric wave; and a transmitting means for amplifying the signal received by the receiving means and thereafter re-emitting the amplified signal within the electromagnetically shielded space.

In the system in accordance with the present invention, a signal having a frequency in a particular frequency band is received by being extracted from any extraneous electric waves by the receiving means, and is amplified and re-emitted within the electromagnetically shielded space by the transmitting means. The present invention thereby ensures that, even in an interior space of an intelligent building formed as an electromagnetically shielded space where the level of received extraneous electric waves is insufficient, a paging system or a mobile radio telephone system operating with electric waves can be utilized without any difficulty as it is used on the outside.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

BRIEF DESCRIPTION OF THE DRAWINGS

Fig. 1 is a diagram of a system for re-emitting extraneous electric waves within an electromagnetically shielded space which represents a first embodiment of the present invention; and

Fig. 2 is a diagram of a system for re-emitting extraneous electric waves within an electromagnetically shielded space which represents a second embodiment of the present invention.

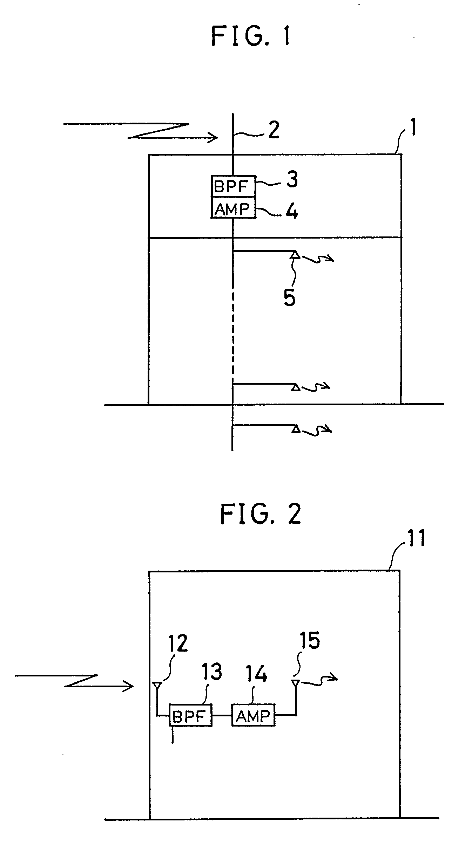

Referring to Fig. 1, a building 1, e.g., an intelligent building which forms an electromagnetically shielded space is provided with an antenna 2 disposed on the roof top to receive extraneous electric waves. A band-pass filter 3 is a narrow-band filter for introducing electric waves in a particular frequency band, e.g. electric waves for a paging system. Indoor transmitters 5 reemit a signal introduced through the band-pass filter and amplified by an amplifier 4 within the electromagnetically shielded space in the building 1. The indoor transmitters 5 are disposed as desired in stories of the building 1 above or under the ground.

In the case where the construction shown in Fig. 1 is applied to a paging system, only signals having frequencies in the specific range for the paging system are extracted through the band-pass filter 3 from electric waves received by the antenna 2. The signals thereby introduced are amplified by the amplifier 4 and are reemitted within the electromagnetically shielded space by the indoor transmitters 5. Thus, the present invention makes it possible to receive, even in intelligent buildings forming electromagnetically shielded spaces, selected electric waves with a sufficient sensitivity without any obstruction as in the case of reception on the outside. The amplifier 4 may be omitted if the intensity of received electric waves is sufficiently high.

Fig. 2 shows another embodiment wherein an antenna 12 is provided inside a building 11 constituting an electromagnetically shielded space. The antenna 12 is located at a position by the side of a wall or window where the sensitivity with which the antenna catches electric waves within the electromagnetically shielded space is maximized. Only signals having frequencies in the specific range for the paging system are extracted through a band-pass filter 13 from electric waves received by the antenna 12, and the signals thereby introduced are amplified by an amplifier 4 and are reemitted by an indoor transmitter 15, as in the case of the first embodiment shown in Fig. 1. The amplifier 14 may be omitted if the intensity of received electric waves is sufficiently high.

It is to be understood that the present invention is not limited to the above-described embodiments and that the invention can be modified in various ways. In the above described embodiments, the present invention is applied to the paging system, but it can, of course, be applied where other various types of systems for communicating information by using electric waves including a mobile radio telephone system are utilized in electromagnetically shielded spaces. The present invention can also be applied in a similar manner where the electromagnetically shielded space is constituted by only a portion of the building. It is of course possible to apply the present invention to transmission as well as reception of extraneous electric waves. In the first embodiment, the antenna disposed on the outside is placed on the rooftop but it may be disposed at a place different from the rooftop or may be used in common as an antenna for a different system.

As is clear from the above description, the system in accordance with the present invention operating with electric waves for a paging system or a mobile radio telephone system can be used in an electromangnetically shielded space without any obstruction since it introduces an electric wave in a particular frequency band through the band-pass filter, amplifies the signal thereby received and reemits the same within the electromagnetically shielded space.

Claims

1. A system for re-emitting within an electromagnetically shielded space (1,11) an extraneous wave in a particular frequency band to perform communication between the inside and the outside of said shielded space, said system comprising: receiving means (2,3) for receiving a signal having a frequency in a particular frequency band from an extraneous electric wave; and transmitting means (4,5) for re-emitting the received signal within said electromagnetically shielded space.

2. A system for re-emitting an extraneous wave within an electromagnetically shielded space according to Claim 1, wherein an antenna (2) of said receiving means is disposed outside said electromagnetically shielded space (1).

3. A system for re-emitting an extraneous wave within an electromagnetically shielded space according to Claim 1, wherein an antenna (2) of said receiving means is disposed by the side of a wall of said electromagnetically shielded space (11).

4. A system according to any one of Claims 1-3 wherein said transmitting means (4,5) incorporates means (4) for amplifying the received signal before transmission.

# FIG. 1

BPF — 3
AMP — 4

# FIG. 2

12    13    14    15
      BPF — AMP